(19) Europäisches Patentamt
European Patent Office
Office européen des brevets

(11) **EP 1 608 920 B1**

(12) **FASCICULE DE BREVET EUROPEEN**

(45) Date de publication et mention
de la délivrance du brevet:
**25.07.2007 Bulletin 2007/30**

(21) Numéro de dépôt: **04742266.2**

(22) Date de dépôt: **12.03.2004**

(51) Int Cl.:
*F25B 17/04* (2006.01)      *F25B 17/08* (2006.01)

(86) Numéro de dépôt international:
**PCT/FR2004/000617**

(87) Numéro de publication internationale:
**WO 2004/085933 (07.10.2004 Gazette 2004/41)**

(54) **PROCEDE ET DISPOSITIF POUR LA PRODUCTION DE FROID RAPIDE ET DE FORTE PUISSANCE**

VERFAHREN UND ANLAGE ZUR SCHNELLEN KÄLTEERZEUGUNG MIT HOHER LEISTUNG

METHOD AND DEVICE FOR RAPID AND HIGH- POWER COLD PRODUCTION

(84) Etats contractants désignés:
**AT BE BG CH CY CZ DE DK EE ES FI FR GB GR HU IE IT LI LU MC NL PL PT RO SE SI SK TR**

(30) Priorité: **18.03.2003 FR 0303306**

(43) Date de publication de la demande:
**28.12.2005 Bulletin 2005/52**

(73) Titulaire: **CENTRE NATIONAL DE LA RECHERCHE SCIENTIFIQUE (CNRS)**
**75016 Paris (FR)**

(72) Inventeurs:
• **SPINNER, Bernard**
**F-66100 PERPIGNAN (FR)**
• **STITOU, Driss**
**F-66570 ST NAZAIRE (FR)**
• **BERTRAND, Olivier**
**F-13370 Mallemort (FR)**

(74) Mandataire: **Sueur, Yvette**
**Cabinet SUEUR et L'HELGOUALCH,**
**109, boulevard Haussmann**
**75008 Paris (FR)**

(56) Documents cités:
**FR-A- 2 749 377          US-A- 1 932 492**
**US-A- 4 944 159          US-A- 5 360 057**
**US-A- 5 924 301          US-A- 5 941 091**
**US-B1- 6 305 186**

EP 1 608 920 B1

**Description**

La présente invention concerne un procédé et un dispositif pour la production de froid rapide et de forte puissance.

Il est connu de produire de la chaleur ou du froid dans des installations basées sur des changements de phase liquide/gaz ou des sorptions renversables entre un gaz, dit gaz de travail, et un sorbant liquide ou solide. Une sorption renversable peut être une absorption d'un gaz par un liquide, une adsorption d'un gaz sur un solide, ou une réaction entre un gaz et un solide. Une sorption renversable entre un sorbant S et un gaz G est exothermique dans le sens de la synthèse S + G → SG, et endothermique dans le sens de la décomposition SG → S + G. Dans un changement de phase liquide/gaz de G, la condensation est exothermique et l'évaporation est endothermique. Ces phénomènes renversables peuvent être représentés sur le diagramme de Clausius-Clapeyron par leur droite d'équilibre

ln

$$P = f(-1/T),$$

plus précisément ln

$$P = -\frac{\Delta H}{RT} + \frac{\Delta S}{R}$$

P et T étant respectivement la pression et la température, $\Delta H$ et $\Delta S$ étant respectivement l'enthalpie et l'entropie du phénomène (décomposition, synthèse, évaporation, condensation) mis en jeu, et R étant la constante des gaz parfaits. L'étape endothermique peut être mise à profit dans une installation de ce type pour congeler divers produits (notamment de l'eau pour l'obtention de glaçons) ou pour la production d'eau froide.

Ainsi, EP-0810410 décrit un dispositif comprenant un réacteur qui est le siège d'une réaction thermochimique ou d'une adsorption solide-gaz mettant en jeu un gaz G, et une enceinte reliée au réacteur par une conduite munie d'une vanne et fonctionnant alternativement comme évaporateur et comme condenseur pour le gaz G. Le réacteur comprend des moyens pour chauffer son contenu et des moyens pour éliminer la chaleur de la réaction de synthèse exothermique, ces moyens étant constitués soit par un échangeur de chaleur, soit par l'augmentation de la masse thermique du réacteur. Le réacteur est aménagé de telle sorte qu'avec son contenu, il ait une masse thermique suffisante pour absorber la chaleur produite lors de la réaction exothermique. Le procédé de gestion de ce dispositif consiste à mettre en communication l'évaporateur/condenseur avec le réacteur lorsque l'évaporateur/condenseur est rempli du gaz de travail sous forme liquide, ce qui a pour effet de refroidir l'évaporateur/ condenseur par évaporation, puis à mettre en marche les moyens destinés à chauffer le solide afin de refouler et condenser le gaz vers l'évaporateur/ condenseur. La mise en marche des moyens destinés à réchauffer le solide dans le réacteur débute avant que l'étape précédente ne soit terminée. Toutefois, dans ce dispositif, les durées de cycles sont relativement longues du fait que la régénération du dispositif se fait à haute température Th et que le refroidissement du réacteur se fait à la température ambiante To. Par conséquent, le réacteur parcourt une amplitude thermique entre la température de régénération et la température ambiante relativement importante ce qui induit un faible coefficient de performance. Par ailleurs, comme la condensation exothermique s'effectue dans la même enceinte que l'évaporation endothermique, l'amplitude thermique de l'enceinte évaporateur/condenseur est élevée, ce qui induit des temps de cycles longs et diminue les performances.

WO-97/40328 décrit un dispositif pour produire du froid et/ou de la chaleur comprenant deux réacteurs en contact thermique, alternativement connectés respectivement soit à un condenseur, soit à un évaporateur. Dans ce dispositif, la production de froid se fait à partir d'un évaporateur libérant un gaz de travail G qui, lors de l'étape de régénération, est envoyé dans un condenseur. US-A-1932452 décrit également un tel dispositif.

EP-0580848 décrit un dispositif pour produire du froid et/ou de la chaleur, dans lequel la production de froid se fait à partir d'un évaporateur libérant le gaz de travail G. Le dispositif comprend d'une part une évaporateur et un condenseur séparés, ainsi que deux ensembles de deux réacteurs chacun, les deux ensembles fonctionnant de manière inversée et alternée pour assurer la production continue de froid. Lors de la phase de production de froid dans l'un des ensembles, les réacteurs dudit ensemble sont reliés à l'évaporateur, alors que dans le même temps, les réacteurs du second ensemble sont reliés au condenseur et fonctionnent en phase de régénération. Ensuite, les connexions sont inversées et les réacteurs du premier ensemble sont reliés au condenseur pour la phase de régénération, alors que les réacteurs du second ensemble sont reliés à l'évaporateur pour la phase de production de froid. L'évaporateur et le condenseur sont agencés pour pouvoir échanger de la chaleur avec leur environnement, ce qui diminue le rendement de la production de froid. Les dispositifs des deux documents de l'art antérieur précités comprennent toujours deux réacteurs qui fonctionnement en opposition de phase, l'un des réacteurs étant connecté au condenseur pendant que l'autre réacteur est connecté à l'évaporateur. L'évaporateur et le condenseur sont donc continuellement en opération et sont alternativement isolés et connectés à l'un des réacteurs.

EP-0382586 décrit un dispositif de production de froid comprenant un évaporateur et un condenseur pour le gaz de travail, et deux réacteurs sièges de phénomènes renversables différents mettant en jeu le même gaz de travail. Les réacteurs fonctionnent de manière alternée. Un réacteur donné est relié à l'évaporateur lorsqu'il est en phase de synthèse (production de froid), et relié au condenseur lorsqu'il est en phase de décomposition (régénération). La température du condenseur est supérieure à celle de l'évaporateur. Le gaz de travail condensé dans le condenseur sert à alimenter l'évaporateur. L'évaporateur et le condenseur sont agencés pour pouvoir échanger de la chaleur avec leur environnement, ce qui provoque une diminution du rendement de la production de froid.

Les procédés de production de froid de l'art antérieur nécessitent un mode de gestion particulier et relativement complexe du fait de la gestion délicate des connexions entre les différents composants du dispositif. En outre, les dispositifs de l'art antérieur pour la production de glaçons à usage domestique sont essentiellement des systèmes basés sur la compression mécanique de vapeur, qui utilisent un fluide frigorigène. Généralement, un simple bac à glaçons amovible est disposé dans un compartiment réfrigéré maintenu à une température comprise entre -10°C et -22°C. L'eau contenue dans le bac à glaçons se congèle alors en quelques heures (typiquement de l'ordre de 4 à 5 heures pour environ 200 g d'eau) par échange thermique avec l'air du compartiment réfrigéré. Les glaçons sont conservés dans ledit compartiment réfrigéré pendant des durées pouvant aller de quelques jours à quelques dizaines de jours, ce qui entraîne une dégradation de leur qualité, voire une contamination des glaçons par des polluants et/ou des inclusions minérales, de sorte que les glaçons sont finalement impropres à la consommation.

Le but de la présente invention est de fournir un procédé et un dispositif moins complexes pour la production rapide de froid utile avec une grande puissance, notamment pour la production rapide de glaçons à l'instant choisi par l'opérateur, ou pour la production de glaçons de manière continue et/ou périodique avec des durées de cycles relativement courtes (inférieures à 10 minutes par exemple).

Le procédé selon l'invention pour la production rapide de froid à une température utile $T_u$ met en oeuvre un système thermochimique basé sur le couplage de phénomènes physico-chimiques renversables entre un gaz et un sorbant solide ou liquide, lesdits phénomènes étant exothermiques dans un sens et endothermiques dans l'autre sens, désignés par phénomène BT et phénomène HT, lesdits phénomènes étant tels que, à une pression donnée, la température d'équilibre du phénomène BT est inférieure à la température d'équilibre du phénomène HT. Ledit procédé consiste à effectuer au moins un cycle constitué par une étape de production de froid et une étape de régénération à partir d'un état initial dans lequel un réacteur siège du phénomène BT et un réacteur siège du phénomène HT sont à la température ambiante et isolés l'un de l'autre, l'étape de production de froid étant constituée par la phase endothermique du phénomène BT qui libère un fluide frigorigène G sous forme de gaz, l'étape de régénération étant constituée par la phase endothermique du phénomène HT qui libère le fluide G sous forme de gaz. Le procédé est caractérisé en ce que :

-   le phénomène BT est un changement de phase liquide/gaz du fluide G ou une absorption du fluide G par un sorbant liquide ;
-   le phénomène HT est une sorption renversable du fluide G par un sorbant liquide ou solide ;
-   la phase endothermique du phénomène BT, correspondant à la production de froid, est effectuée dans un réacteur isolé thermiquement de l'environnement ambiant ;
-   la phase exothermique du phénomène BT, correspondant à la régénération, est effectuée dans un condenseur en communication avec le réacteur siège du phénomène HT, le fluide G condensé étant ensuite transféré dans le réacteur siège de la phase endothermique du phénomène BT ;
-   l'étape de production de froid comprend :

    •   une phase A1 au cours de laquelle le réacteur siège du phénomène HT (désigné ci-après par réacteur HT) et le réacteur siège du phénomène BT (désigné ci-après par réacteur BT) sont mis en communication ;
    •   une phase A2 au cours de laquelle les réacteurs HT et BT sont isolés l'un de l'autre et le réacteur HT est chauffé ;

-   l'étape de régénération comprend :

    •   une phase C au cours de laquelle le réacteur HT est chauffé et en communication permanente avec un condenseur ;
    •   une phase D consistant à transférer le fluide G sous forme liquide du condenseur vers le réacteur BT ;
    •   une phase E consistant à refroidir le réacteur HT pour l'amener dans les conditions initiales.

Lors de la mise en oeuvre du procédé de l'invention, il est indispensable que le réacteur siège du phénomène renversable HT soit en communication avec le condenseur pendant l'étape de régénération. Durant l'étape de production de froid, ledit réacteur HT et le condenseur peuvent être en communication ou non. La mise en communication permanente permet d'éviter les interventions qui seraient nécessaires pour établir la communication après une interruption.

La phase A1 est une phase de production active de froid : la mise en communication des réacteurs HT et BT provoque la production spontanée de gaz G dans le réacteur BT. Ce phénomène étant endothermique, il génère du froid. La phase A2 est une phase de production passive de froid : bien qu'il n'y ait plus de libération de gaz dans le réacteur BT parce que les réacteurs BT et HT sont isolés l'un de l'autre, il se produit du froid du fait que la masse thermique du réacteur BT absorbe à son tour de la chaleur. Parallèlement, le chauffage du réacteur HT permet de le mettre dans les conditions de régénération, ce qui libère sous forme de gaz le fluide G qui a été absorbé par le sorbant du réacteur HT durant la phase précédent de production de froid. Lors de l'étape C, la libération sous forme de gaz du fluide G à partir du réacteur HT continue, et le gaz est transféré vers le condenseur dans lequel il se condense spontanément, la chaleur de condensation étant évacuée par des moyens dont le condenseur est muni. Le passage dans un condenseur du fluide G libéré sous forme de gaz lors de l'étape C permet, lors de l'étape D, d'introduire dans le réacteur BT le fluide frigorigène G refroidi et sous forme liquide, ce qui limite l'augmentation de la température dans le réacteur BT, et accélère le démarrage de l'étape endothermique (productrice de froid utile) lors du cycle suivant dans ledit réacteur BT. Les cycles de fonctionnement du dispositif sont ainsi très courts.

La durée de l'étape D est très courte, typiquement inférieure à 1 minute. L'étape D peut être effectuée pendant le déroulement de l'étape C.

Lorsque le procédé vise à fabriquer des glaçons, les glaçons se forment sur un support situé à l'intérieur du réacteur BT. Le procédé peut alors comprendre une phase intermédiaire B entre la phase A2 de production passive de froid et la phase C de l'étape de régénération, en vue de décoller les glaçons du support sur lequel ils se forment. Cette étape intermédiaire B peut consister à mettre en communication le condenseur et le réacteur BT pendant une durée très courte (typiquement inférieure à 1 minute), pour amener à proximité du support sur lequel se forment les glaçons, une partie du gaz chaud libéré par l'étape endothermique du réacteur HT. Elle peut en outre être effectuée par d'autres moyens, notamment par des résistances électriques intégrées ou rapportées dans la paroi du réacteur BT ou placés dans le réacteur BT à proximité du support des glaçons.

Dans un mode de réalisation particulier, au cours de l'étape A1, on évacue la chaleur formée par l'étape exothermique dans le réacteur HT, afin de maintenir la température dans ledit réacteur à une valeur inférieure à sa température d'équilibre. Il en résulte un fonctionnement plus rapide du dispositif avec un meilleur rendement.

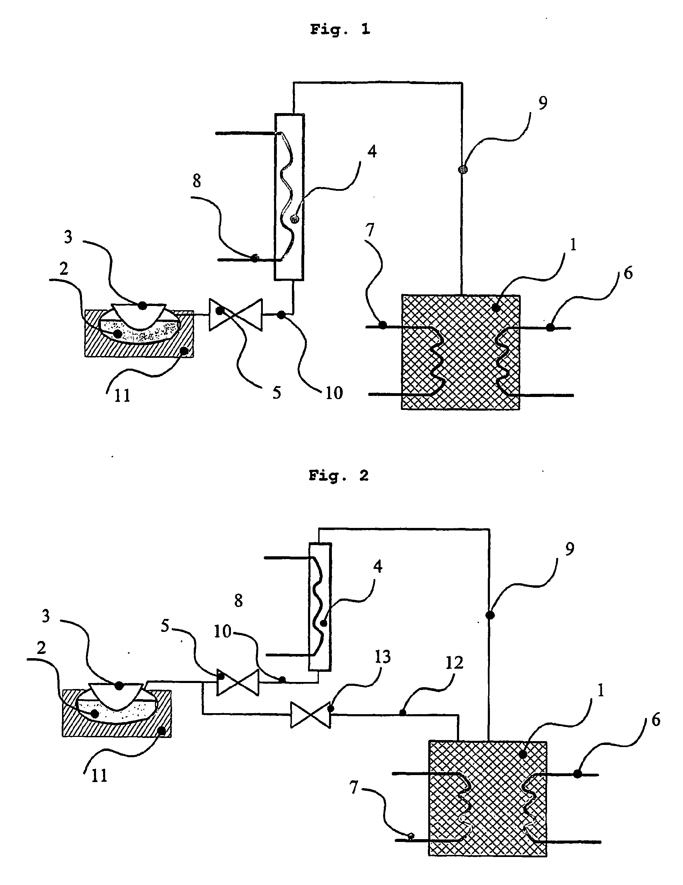

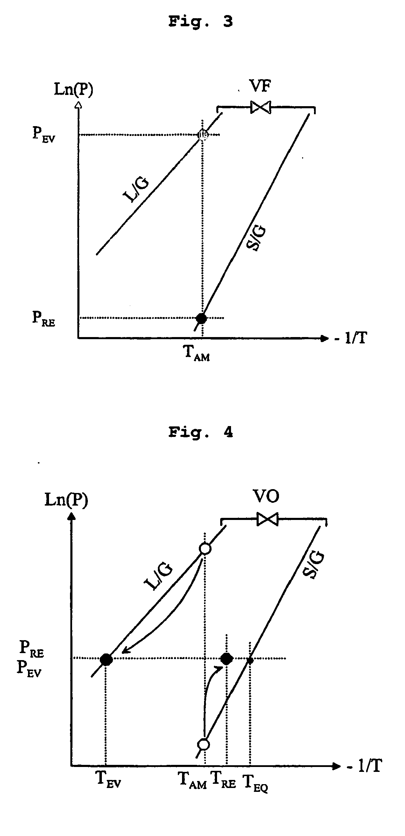

Le procédé selon la présente invention peut être mis en oeuvre dans un dispositif tel que représenté sur la figure 1. Ledit dispositif comprend deux réacteurs (1) et (2) et un condenseur (4) muni de moyens (8) par évacuer la chaleur. Le réacteur (2) (siège du phénomène BT) est relié au condenseur (4) par une conduite (10) munie d'une vanne (5), et le condenseur (4) est relié au réacteur (1) (siège du phénomène HT) par une conduite (9). Le réacteur (1) est muni de moyens de chauffage (6) et de moyens (7) pour évacuer la chaleur, et il contient un sorbant liquide ou solide capable de former un phénomène renversable avec un fluide frigorigène G. Le réacteur (2) comprend des moyens (11) qui permettent de l'isoler thermiquement du milieu ambiant, et il contient la forme liquide du fluide frigorigène G ou un sorbant liquide capable d'absorber le fluide frigorigène G. Il est particulièrement avantageux d'utiliser un évaporateur comme réacteur (2). Lors de la phase A1 de l'étape de production de froid, le fluide G libéré sous forme de gaz par le réacteur (2) circule vers le réacteur (1) à travers la conduite 10, le condenseur (4) inactivé et la conduite (9). Dans ce mode de réalisation, le condenseur (4) est en connexion permanente avec le réacteur (1), tandis que le réacteur (2) n'est en connexion avec le réacteur (1) que durant les phases A1, B et D. Lorsque le dispositif est destiné à la production de glaçons, un bac à glaçons (3) est placé dans le réacteur (2), de telle sorte qu'au moins une partie du bac soit en contact avec le fluide frigorigène.

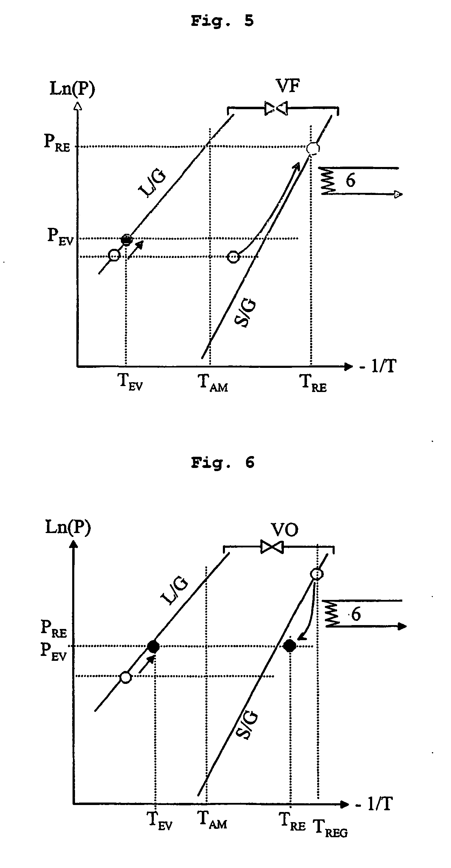

Dans un autre mode de réalisation, représenté sur la figure 2, le dispositif comprend en outre une conduite (12) munie d'une vanne (13) reliant directement les réacteurs (1) et (2).

Dans un dispositif selon l'invention, lors de l'étape de production de froid correspondant à la phase exothermique du phénomène HT, il est particulièrement avantageux de maintenir, dans le réacteur (1), la température à un niveau inférieur à la température d'équilibre, afin d'améliorer le rendement et la vitesse de la réaction. Ce but peut être atteint en utilisant un réacteur (1) muni de moyens pour évacuer ou absorber la chaleur lors de cette étape exothermique. Le but peut en outre être atteint en utilisant un réacteur (1) siège d'un phénomène renversable entre un solide actif et le fluide G, ledit solide actif étant mélangé à un matériau poreux ayant une grande diffusivité thermique. Le matériau poreux est avantageusement du graphite naturel expansé et recomprimé. Le solide actif peut être du charbon actif lorsque le fluide frigorigène est le méthanol ou l'ammoniac. Le solide actif peut également être choisi parmi les sels réactifs tels que les halogénures de métaux alcalino-terreux (par exemple des chlorures tels que $MnCl_2$, $SrCl_2$, $NiCl_2$, des bromures tels que $CaBr_2$, $SrBr_2$, des sulfates tels que $CuSO_4$) destinés à réagir de manière renversable avec un gaz actif, par exemple l'ammoniac ou ses dérivés tels que la monométhylamine et la diméthylamine.

La mise en oeuvre du procédé de l'invention à l'aide d'un dispositif conforme à la figure 1 est décrite en détail ci-après, pour un dispositif dans lequel le réacteur (2) est un évaporateur, le fluide frigorigène est désigné par G, le réacteur (1) contient un solide actif S. L'évaporateur comprend un bac à glaçons intégré (3) contenant un liquide à congeler. L'état du dispositif lors des différentes étapes est représenté par des diagrammes de Clausius - Clapeyron (figures 3 à 8) sur lesquels P représente la pression et T la température, les courbes L/G représentent les courbes d'équilibre du changement d'état liquide-gaz dans l'évaporateur, et les courbes S/G représentent les courbes d'équilibre du phénomène de sorption dans le réacteur (1). $T_{AM}$ désigne la température ambiante, $T_{EV}$ désigne la température dans l'évaporateur, $T_{RE}$ désigne la température dans le réacteur (1), $T_{EQ}$ désigne la température d'équilibre du phénomène de sorption dans le réacteur (1), $P_{EV}$ désigne la pression dans l'évaporateur, $P_{RE}$ désigne la pression dans le réacteur (1), $T_{REG}$ désigne la température de régénération. Les mentions VF et VO signifient respectivement que la vanne (5) placée entre l'évaporateur et le condenseur est fermée ou ouverte.

L'état initial du premier cycle de fonctionnement du dispositif est représenté sur la figure 3. A cet instant, l'évaporateur est rempli de fluide frigorigène G sous forme liquide tandis que le solide actif S contenu dans le réacteur.(1) a une composition pauvre en fluide G. L'évaporateur et le réacteur (1) sont à la température ambiante $T_{AM}$ et à leur pression d'équilibre respective : l'évaporateur est à haute pression $P_{EV}$ tandis que le réacteur est à basse pression $P_{RE}$. Le condenseur, qui ne contient pas de liquide, est à la température ambiante et à la pression du réacteur. La vanne (5) est fermée.

L'étape A1, correspondant à la production active instantanée de froid, est représentée sur la figure 4 : l'évaporateur et le réacteur (1) sont mis en communication via le condenseur qui reste inactif et qui constitue ainsi une simple tubulure de passage pour le gaz de l'évaporateur vers le réacteur (1). Le fluide frigorigène contenu sous forme liquide dans l'évaporateur s'évapore et provoque une baisse brutale de la température de l'évaporateur, ce qui permet la congélation rapide de l'eau contenue dans le bac pour former des glaçons. Le fluide libéré sous forme de gaz par l'évaporation est absorbé par le solide actif du réacteur (1), ce qui provoque une montée en température du réacteur du fait de la sorption exothermique. A cause du passage de gaz froid, la température de la paroi du condenseur diminue, ce qui favorisera ultérieurement la condensation du gaz lors de la phase de régénération du réacteur. Dans un premier temps, l'énergie produite par la réaction dans le réacteur (1) est absorbée par la masse thermique du réacteur, ce qui a pour effet d'augmenter la température du contenu du réacteur (1) qui se rapproche de son équilibre thermodynamique, induisant une baisse de la production frigorifique. Lorsque le réacteur comprend des moyens (7) pour évacuer la chaleur, cet échangeur de chaleur permet d'évacuer la partie de l'énergie produite par la réaction de synthèse qui n'est pas absorbée par la masse thermique du contenu du réacteur (1) et de refroidir le réacteur afin de maintenir le solide réactif dans les conditions de synthèse, ($T_{RE} < T_{EQ}$), ce qui limite la baisse de la production frigorifique. La production d'une puissance frigorifique instantanée est importante initialement à cause de l'écart de température ($T_{EQ} - T_{AM}$) important observé initialement dans le réacteur (1).

Pour la phase A2 : la vanne (5) est fermée. Le réacteur (1) est isolé de l'évaporateur, mais reste en communication avec le condenseur. Le réacteur (1) est alors chauffé. Ce chauffage permet au réacteur (1) de se déplacer le long de son équilibre thermodynamique, provoquant simultanément une montée en température et en pression du réacteur (1) et du condenseur (4) inactif. Dans l'évaporateur, le fluide frigorigène ne s'évapore plus du fait que la vanne (5) est fermée. La production de froid continue cependant de manière passive parce que la masse thermique de l'évaporateur absorbe à son tour la chaleur nécessaire à la poursuite de la congélation de l'eau du bac à glaçons. L'état du dispositif durant cette phase A2 est représenté sur la figure 5.

Pour la phase B : la mise en communication sur un cours instant (par exemple quelques dizaines de secondes) du réacteur (1) placé dans les conditions de régénération à haute pression avec l'évaporateur maintenu à basse pression par sa masse thermique permet la désorption rapide du gaz du réacteur (1). L'évaporateur, recevant du gaz chaud provenant du réacteur (1), joue alors le rôle d'un condenseur pendant un cours instant. Cette phase permet de décoller les glaçons de la paroi du bac à glaçons, lorsque le gaz chaud arrive dans la zone appropriée de la surface du bac à glaçons. En outre, l'écart de température ($T_{RE} - T_{EQ}$) initialement observé dans le réacteur du fait de la différence de pression permet une désorption rapide du gaz réactif accélérant ainsi la phase de régénération. L'état du dispositif dans cette phase est représenté sur la figure 6.

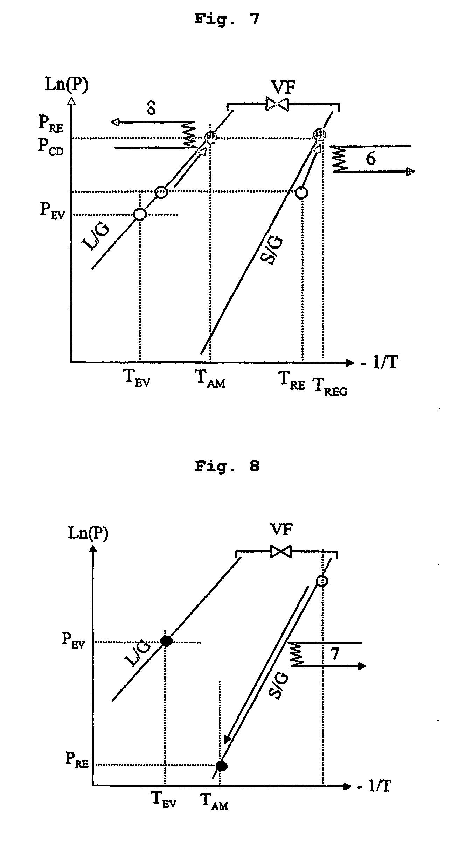

La phase C est la phase de régénération rapide du dispositif. Dès que les glaçons on été décollés (leur évacuation pouvant s'effectuer ultérieurement), la vanne (5) est fermée à nouveau. On maintient le chauffage du réacteur (1) qui continue la désorption du gaz, ledit gaz étant transféré vers le condenseur refroidi par les moyens (8), dans lequel il se condense. Le gaz condensé est accumulé progressivement sous forme liquide dans le bas du condenseur. L'état du dispositif est représenté sur la figure 7.

La phase D commence dès que la régénération est terminée. Le réacteur (1) est refroidi et on ouvre la vanne (5) pendant un court instant (typiquement quelques dizaines de secondes). La haute pression régnant dans le condenseur permet de propulser le gaz condensé contenu dans le condenseur vers l'évaporateur qui se remplit ainsi de liquide. L'évaporateur reste à une température plus faible que s'il avait servi de condenseur, ce qui réduit la durée du cycle et améliore l'efficacité du système de production de froid par le fait que l'on diminue la quantité de froid consommée par la descente en température de l'évaporateur. Ensuite, la vanne est refermée et on continue de refroidir le réacteur (1) isolé, ce qui provoque une baisse de température et de pression. Le dispositif se met ainsi dans les conditions initiales de la phase de stockage de la production de froid du début du second cycle de fonctionnement. L'état du dispositif pendant cette phase est représenté sur.la figure 8.

Lorsque le procédé est mis en oeuvre dans un dispositif tel que représenté sur la figure 2, qui comprend une conduite (12) munie d'une vanne (13) reliant directement le réacteur (1) et l'évaporateur, le dispositif fonctionne d'une manière similaire. A l'état initial du premier cycle de fonctionnement, les vannes (5) et (13) sont fermées. Au cours de la phase A1, la vanne (13) est ouverte pour mettre en communication directe le réacteur (1) et l'évaporateur, la vanne (5) pouvant être ouverte ou fermée. Au cours des phases A2 et C, les deux vannes sont fermées. Au cours de l'étape B, au moins l'une des vannes (13) et (5) est ouverte. Au cours de l'étape D, la vanne (13) est fermée et la vanne (5) est ouverte. A la fin de l'étape D, on ferme les deux vannes.

Lorsque le but du procédé est de produire des glaçons, le réacteur (2) est avantageusement un évaporateur comprenant un bac à glaçons (3). L'évaporateur est destiné à accueillir le fluide frigorigène sous forme liquide qui, en s'évaporant, permet la production du froid. Il est isolé thermiquement de l'environnement, ce qui permet .de réduire les pertes frigorifiques vers le milieu ambiant. Dans un mode de réalisation préféré, le bac à glaçons fait partie intégrante de l'évaporateur. Dans un autre mode de réalisation, le bac à glaçons est simplement fixé ou posé sur une paroi de l'évaporateur qui est en contact avec le fluide frigorifique en ébullition, soit directement, soit par l'intermédiaire d'ailettes.

La paroi du bac à glaçon doit être constituée par un matériau qui a une diffusivité thermique élevée (c'est-à-dire une faible capacité thermique qui permet une descente rapide de la température de la paroi et une forte conductivité thermique qui favorise une formation rapide des glaçons), qui est compatible avec le fluide frigorigène, et qui a une bonne résistance à la pression. Les matériaux à base d'aluminium (par exemple l'aluminium 5086 ou 5083) et les aciers répondent à ces critères lorsque le fluide frigorigène est l'ammoniac.

Un évaporateur comprenant un bac à glaçons intégré peut être constitué par deux profilés creux qui ont des concavités différentes et qui sont assemblés le long de leurs bords longitudinaux, le profilé ayant la plus petite concavité étant placé au-dessus du profilé ayant la plus grande concavité, les parties concaves respectives étant orientées vers le haut. Les concavités peuvent être formées par exemple par des portions d'arcs circulaires ou elliptiques de diamètres différents, les profilés étant alors des portions de tubes de section cyclindrique ou elliptique tronqués longitudinalement.

Les profilés peuvent être en contact sur leur génératrice inférieure. Le profilé supérieur constitue le bac à glaçons et le profilé inférieur constitue le réservoir de fluide frigorigène. Cette géométrie permet un contact direct entre le fluide frigorigène en ébullition et la paroi inférieure du bac à glaçons.

Il est préférable que le bac à glaçons soit compartimenté par des cloisons qui permettent l'obtention de glaçons séparés ayant la forme souhaitée. Lesdites cloisons ont en outre pour effet d'augmenter la rigidité de l'ensemble et d'intensifier les transferts thermiques pour favoriser la formation rapide de glaçons.

Afin d'éviter une remontée trop importante en température de l'évaporateur lors des phases de non production active de froid, la capacité thermique peut être améliorée davantage par utilisation de cloisons creuses qui contiennent un matériau à changement de phase, ou par utilisation d'un profilé inférieur muni d'alvéoles remplies de matériau à changement de phase.

Les cloisons comportent de préférence des encoches qui facilitent le remplissage homogène du bac en eau et la séparation des glaçons les uns des autres lors de la phase d'évacuation.

Des ailettes peuvent être placées dans l'espace entre les deux profilés pour améliorer la diffusivité thermique. Elles peuvent être creuses et contenir un matériau à changement de phase.

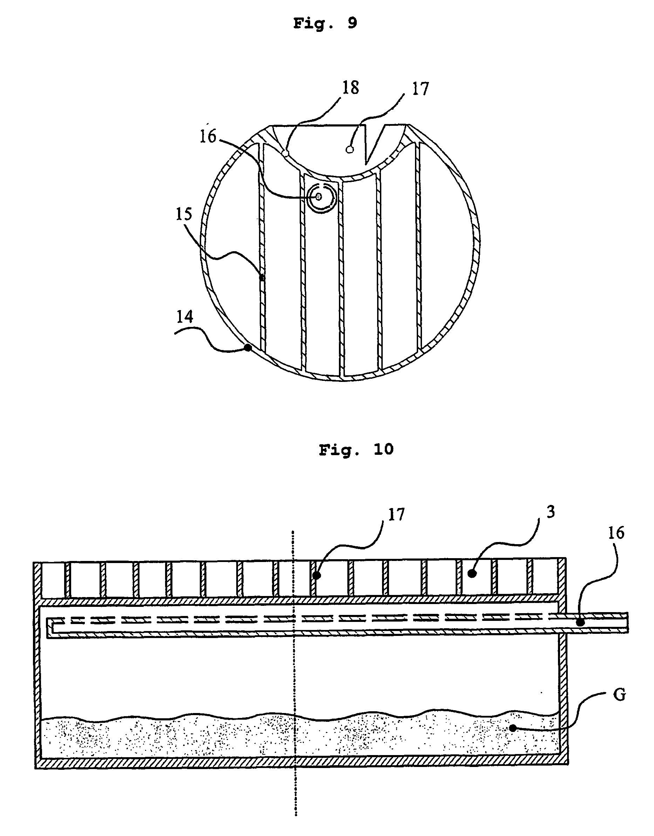

Un mode de réalisation d'un évaporateur dans lequel les profilés ont une concavité cylindrique et les sections respectives des profilés sont telles que la distance entre les bords longitudinaux de l'un des profilés est identique à la distance entre les bords longitudinaux de l'autre profilé, les deux profilés étant assemblés le long de leurs bords longitudinaux, est représenté sur les figures 9 et 10. La figure 9 représente une vue en section. La figure 10 est une vue en coupe longitudinale. L'évaporateur est constitué par un profilé inférieur (14) qui est fermé à ses deux extrémités et qui comporte à sa partie supérieure une rainure longitudinale formée par le profilé supérieur (18) ayant le plus petit diamètre. Ledit profilé supérieur forme le bac à glaçon (3) pouvant contenir plusieurs glaçons séparés par des cloisons (17) dont le matériau est choisi de préférence à améliorer la diffusion de froid vers les glaçons. Des ailettes (15), qui peuvent être creuses et contenir un matériau à changement de phase, sont placées à l'intérieur de l'évaporateur, soit dans le sens longitudinal comme représenté sur la figure 9, soit dans le sens transversal (non représenté). Un tube (16) relié à la conduite permettant le transfert du gaz G entre l'évaporateur et le réacteur (1) pénètre dans l'enceinte cylindrique de l'évaporateur par un alésage réalisé dans l'une des extrémités du cylindre, et il est placé directement sous la paroi du bac à glaçons (3). Le fluide frigorigène G est représenté sous forme d'un liquide en ébullition dans le fond de l'évaporateur.

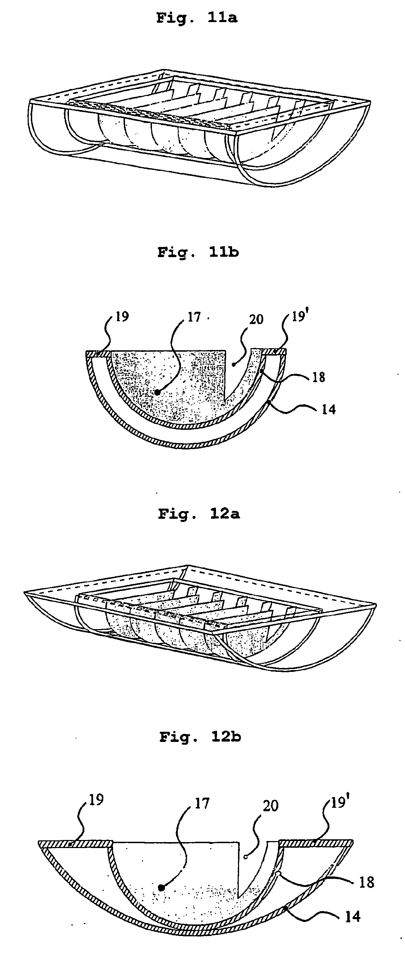

Un mode de réalisation dans lequel les profilés ont une concavité cylindrique et sont tels que la distance entre les bords longitudinaux du profilé de plus grand diamètre est supérieure à la distance entre les bords longitudinaux de l'autre profilé, le fond du profilé de plus petit diamètre étant placé au-dessus du fond du profilé de plus grand diamètre, est illustré par les figures 11a et 11b. La figure 11a est une vue schématique en perspective par transparence. La figure 11b est une vue schématique en section. Les fonds des profilé inférieur (14) et supérieur (18) ne sont pas en contact, et leurs bords longitudinaux respectifs sont reliés par les segments longitudinaux (19) et (19'). Des cloisons (17) comportant une encoche (20) divisent le bac à glaçons formé par la partie concave du profilé (18) en compartiments.

Un mode de réalisation dans lequel les sections respectives des profilés sont telles que la distance entre les bords longitudinaux du profilé de plus grand diamètre est supérieure à la distance entre les bords longitudinaux de l'autre profilé, le fond du profilé de plus petit diamètre étant en contact avec le fond du profilé de plus grand diamètre est illustré par les figures 12a et 12b. La figure 12a est une vue schématique par transparence en perspective. La figure 12b est une vue schématique en section. Les fonds des profilés inférieur (14) et supérieur (18) sont en contact, et leurs bords longitudinaux respectifs sont reliés par les segments longitudinaux (19) et (19'). Des cloisons (17) comportant une encoche (20) divisent le bac à glaçons formé par la partie concave du profilé (18) en compartiments.

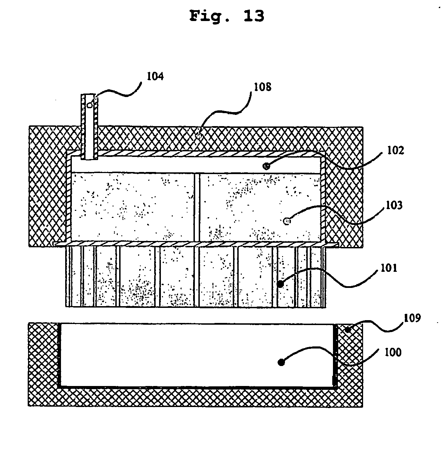

La figure 13 représente une autre forme de réalisation d'un évaporateur, dans lequel le bac à glaçons est constitué d'un simple récipient (100) destiné à accueillir le liquide à congeler. Ce récipient est muni d'un isolant thermique (109) placé en périphérie pour limiter les pertes thermiques avec l'environnement. Il est amovible et s'adapte sur la partie inférieure de l'évaporateur (102) comportant également un isolant thermique (108). L'évaporateur (102) est muni d'ailettes extérieures 101 qui plongent dans le bac à glaçons et d'ailettes intérieures (103) qui permettent d'intensifier l'ébullition du fluide frigorigène. L'évaporateur est également muni d'une tubulure (104) permettant de le connecter au reste du dispositif.

## Revendications

1. Procédé pour la production rapide de froid à une température utile $T_u$ qui met en oeuvre un système thermochimique basé sur le couplage de phénomènes physico-chimiques renversables entre un gaz et un sorbant solide ou liquide, lesdits phénomènes étant exothermiques dans un sens et endothermiques dans l'autre sens, désignés par phénomène BT et phénomène HT, lesdits phénomènes étant tels que, à une pression donnée, la température d'équilibre du phénomène BT est inférieure à la température d'équilibre du phénomène HT, ledit procédé consistant à effectuer au moins un cycle constitué par une étape de production de froid et une étape de régénération à partir d'un état initial dans lequel un réacteur (2) siège du phénomène BT et un réacteur (1) siège du phénomène HT sont à la température ambiante et isolés l'un de l'autre, ledit procédé étant **caractérisé en ce que** :

    - le phénomène BT est un changement de phase liquide/gaz du fluide G ou une absorption du fluide G par un sorbant liquide ;
    - le phénomène HT est un sorption du fluide G par un sorbant liquide ou solide ;
    - la phase endothermique du phénomène BT est effectuée dans un réacteur isolé thermiquement de l'environnement ambiant ;
    - la phase exothermique du phénomène BT est effectuée dans un condenseur (4) en communication permanente avec le réacteur (1) siège du phénomène HT, le fluide G condensé étant ensuite transféré dans le réacteur (2) siège de la phase endothermique du phénomène BT.
    - l'étape de production de froid, constituée par la phase endothermique du phénomène BT qui libère un fluide frigorigène G sous forme de gaz comprend :

        • une phase A1 au cours de laquelle le réacteur siège du phénomène HT (désigné ci-après par réacteur HT) et le réacteur siège du phénomène BT (désigné ci-après par réacteur BT) sont mis en communication ; (5);
        • une phase A2 au cours de laquelle les réacteurs (1,2) HT et BT sont isolés l'un de l'autre et le réacteur HT est chauffé ;

    - l'étape de régénération, constituée par la phase endothermique du phénomène HT qui libère le fluide G sous forme de gaz, comprend :

        • une phase C au cours de laquelle le réacteur HT est chauffé (6) et en communication permanente avec un condenseur ;
        • une phase D consistant à transférer le fluide G sous forme liquide du condenseur (4) vers le réacteur (2) BT ;
        • une phase E consistant à refroidir le réacteur HT pour l'amener dans les conditions initiales.

2. Procédé selon la revendication 1, mis en oeuvre pour la production de glaçons, **caractérisé en ce qu'**il comprend, entre la phase A2 de production passive de froid et la phase C de l'étape de régénération, une phase intermédiaire B pour décoller les glaçons.

3. Procédé selon la revendication 2, **caractérisé en ce que** la phase B consiste à mettre en communication le condenseur et le réacteur BT pendant une courte durée, pour amener à proximité du support sur lequel se forment les glaçons, une partie du gaz chaud libéré par l'étape endothermique du réacteur HT.

4. Procédé selon la revendication 2, **caractérisé en ce que** la phase B est mise en oeuvre à l'aide de résistances électriques intégrées ou rapportées dans la paroi du réacteur BT ou dans le réacteur BT à proximité du support des glaçons.

5. Procédé selon la revendication 1, **caractérisé en ce que**, au cours de l'étape A1, on évacue la chaleur formée par l'étape exothermique dans le réacteur HT.

6. Procédé selon la revendication 1, **caractérisé en ce que** l'étape D est effectuée pendant le déroulement de l'étape C.

7. Procédé selon la revendication 1, **caractérisé en ce que** le réacteur siège du phénomène H'1' et le condenseur sont en communication de manière permanente.

8. Dispositif pour la mise en oeuvre du procédé selon l'une des revendications 1 à 7, c**aractérisé en** ce que :

> - il comprend deux réacteurs (1) et (2) et un condenseur (4) muni de moyens (8) par évacuer la chaleur ;
> - Le réacteur (2) est relié au condenseur (4) par une conduite (10) munie d'une vanne (5) ;
> - le condenseur (4) est relié au réacteur (1) par une conduite (9) ;
> - le réacteur (1) est muni de moyens de chauffage (6) et de moyens (7) pour évacuer la chaleur, et il contient un sorbant liquide ou solide capable de réaliser une sorption renversable d'un fluide frigorigène G ;
> - le réacteur (2) comprend des moyens (11) qui permettent de l'isoler thermiquement du milieu ambiant, et il contient la forme liquide du fluide frigorigène G ou un sorbant liquide capable d'absorber le fluide frigorigène G.

9. Dispositif selon la revendication 8, **caractérisé en ce qu'**il comprend en outre une conduite (12) munie d'une vanne (13) reliant directement les réacteurs (1) et (2)

10. Dispositif selon l'une des revendications 98 ou **9**, **caractérisé en ce que** le réacteur (2) est un évaporateur.

11. Dispositif selon l'une des revendications **8** à **10**, **caractérisé en ce que** le réacteur (2) est un évaporateur muni d'un bac à glaçons (3).

12. Dispositif selon la revendication **11**, **caractérisé en ce que** le bac à glaçons fait partie intégrante de l'évaporateur.

13. Dispositif selon la revendication 11, **caractérisé en ce que** le bac à glaçons est fixé ou posé sur une paroi de l'évaporateur qui est en contact avec le fluide frigorifique en ébullition, directement ou par l'intermédiaire d'ailettes.

14. Dispositif selon la revendication 12, **caractérisé en ce que** l'évaporateur est constitué par deux profilés creux qui ont des concavités différentes et qui sont assemblés le long de leurs bords longitudinaux, le profilé ayant la plus petite concavité étant placé audessus du profilé ayant la plus grande concavité, les parties concaves respectives étant orientées vers le haut, le profilé ayant la plus petite concavité formant le bac à glaçons, le profilé ayant la plus grande concavité formant le réservoir pour le fluide frigorigène.

15. Dispositif selon la revendication **14**, **caractérisé en ce que** les concavités sont formées par des portions d'arcs circulaires ou elliptiques de diamètres différents, les profilés étant des portions de tubes de section cyclindriques ou elliptique tronqués longitudinalement.

16. Dispositif selon la revendication **14**, **caractérisé en ce que** les profilés sont en contact sur leur génératrice inférieure.

17. Dispositif selon l'une des revendications **11** à **16**, **caractérisé en ce que** le bac à glaçons est compartimenté par des cloisons.

18. Dispositif selon la revendication **17**, **caractérisé en ce que** les cloisons sont creuses et contiennent un matériau à changement de phase.

19. Dispositif selon la revendication 14, **caractérisé en ce que** le profilé inférieur est muni d'alvéoles remplies de matériau à changement de phase.

20. Dispositif selon la revendication 17, **caractérisé en ce que** les cloisons comportent des encoches.

21. Dispositif selon la revendication **14**, **caractérisé en ce que** des ailettes sont placées dans l'espace entre les deux profilés.

22. Dispositif selon la revendication **21**, **caractérisé en ce que** les ailettes sont creuses et contiennent un matériau à changement de phase.

23. Dispositif selon la revendication 13, **caractérisé en ce que** :

> - le bac à glaçons est constitué par un récipient (100),
> - ledit récipient est muni d'un isolant thermique (109) placé à sa périphérie,
> - ledit récipient est amovible et s'adapte sur la partie inférieure de l'évaporateur (102) qui comporte également un isolant thermique (108) ;
> - l'évaporateur (102) est muni d'ailettes extérieures 101 qui plongent dans le bac à glaçons et d'ailettes intérieures (103) ;
> - l'évaporateur est muni d'une tubulure (104) permettant de le connecter au reste du dispositif.

**Claims**

1. A method for rapid refrigeration at a useful temperature $T_u$ which employs a thermochemical system based on the coupling of reversible physico-chemical phenomena between a gas and a solid or liquid sorbent, said phenomena being exothermic in one direction and endothermic in the other direction, called the LT phenomenon and the HT phenomenon, said phenomena being such that, at a given pressure, the equilibrium temperature of the LT phenomenon is below the equilibrium temperature of the HT phenomenon, said method consisting in carrying out at least one cycle consisting of a refrigeration step and a regeneration step starting from an initial state in which a reactor (2) in which the LT phenomenon occurs and a reactor (1) in which the HT phenomenon occurs are at the ambient temperature and isolated from each other, said method being **characterized in that**:

   - the LT phenomenon is a liquid/gas phase change of the fluid G or an absorption of the fluid G by a liquid sorbent;
   - the HT phenomenon is a sorption of the fluid G by a liquid or solid sorbent;
   - the endothermic phase of the LT phenomenon takes place in a reactor thermally isolated from the ambient environment; and
   - the exothermic phase of the LT phenomenon takes place in a condenser (4) in permanent communication with the reactor (1) in which the HT phenomenon takes place, the condensed fluid G then being transferred into the reactor (2) in which the endothermic phase of the LT phenomenon takes place ;
   - the refrigeration step consists of the endothermic phase of the LT phenomenon which releases a refrigerant fluid G in gas form, and comprises:

      • a phase A1 during which the reactor in which the HT phenomenon takes place (hereinafter denoted by HT reactor) and the reactor in which the LT phenomenon takes place (denoted hereafter by LT reactor) are placed in communication with each other (5) ; and
      • a phase A2 during which the HT and LT reactors (1,2) are isolated from each other and the HT reactor is heated; and

   - the regeneration step consists of the endothermic phase of the HT phenomenon which releases the fluid G in gas form, and comprises:

      • a phase C during which the HT reactor is heated (6) and in permanent communication with a condenser;
      • a phase D consisting in transferring the fluid G in liquid form from the condenser (4) to the LT reactor (2) ; and
      • a phase E consisting in cooling the HT reactor (1) in order to return it to the initial conditions.

2. The method as claimed in claim 1, implemented for ice production, **characterized in that** it comprises, between passive refrigeration phase A2 and phase C of the regeneration step, an intermediate phase B for separating the pieces of ice from the support.

3. The method as claimed in claim 2, **characterized in that** phase B consists in bringing the condenser into communication with the LT reactor for a short period so as to bring some of the hot gas released by the endothermic step of the HT reactor into proximity with the support on which the pieces of ice form.

4. The method as claimed in claim 2, **characterized in that** phase B is implemented using electrical resistance elements integrated into or attached to the wall of the LT reactor, or in the reactor BT, near the ice support.

5. The method as claimed in claim 1, **characterized in that**, during step A1, the heat generated by the exothermic step in the HT reactor is extracted.

6. The method as claimed in claim 1, **characterized in that** step D is carried out during execution of step C.

7. The method as claimed in claim 1, **characterized in that** the reactor in which the HT phenomenon takes place and the condenser are permanently in communication with each other.

8. A device for implementing the method as claimed in one of claims 1 to 7, **characterized in that**:

   - it comprises two reactors (1) and (2) and a condenser (4) provided with means (8) for extracting the heat;
   - the reactor (2) is connected to the condenser (4) via a line (10) provided with a valve (5);
   - the condenser (4) is connected to the reactor (1) via a line (9);
   - the reactor (1) is provided with heating means (6) and with means (7) for extracting the heat, and it contains a liquid or solid sorbent capable of reversibly sorbing a refrigerant fluid G; and
   - the reactor (2) includes means (11) for thermally isolating it from the ambient medium, and it contains the liquid form of the refrigerant fluid G or a liquid sorbent capable of absorbing the refrigerant fluid G.

9. The device as claimed in claim 8, **characterized in that** it further includes a line (12) provided with a valve (13) that connects the reactor (1) directly to the reactor (2) .

10. The device as claimed in either of claims 8 and 9, **characterized in that** the reactor (2) is an evaporator.

11. The device as claimed in one of claims 8 to 10, **characterized in that** the reactor (2) is an evaporator provided with an ice tray (3).

12. The device as claimed in claim 11, **characterized in that** the ice tray forms an integral part of the evaporator.

13. The device as claimed in claim 11, **characterized in that** the ice tray is fixed to or placed on a wall of the evaporator that is in contact with the boiling refrigerant fluid, directly or via fins.

14. The device as claimed in claim 12, **characterized in that** the evaporator is formed by two hollow sections that have different concavities and are joined together along their longitudinal edges, the section having the smaller concavity being placed above the section having the larger concavity, the respective concave parts being upwardly directed, the section having the smaller concavity forming the ice tray and the section having the larger concavity forming the reservoir for the refrigerant fluid.

15. The device as claimed in claim 14, **characterized in that** the concavities are formed by portions of circular or elliptical arcs of different diameters, the sections being portions of longitudinally truncated tubes of cylindrical or elliptical cross-section.

16. The device as claimed in claim 14, **characterized in that** the sections are in contact with each other along their lower generatrices.

17. The device as claimed in one of claims 11 to 16, **characterized in that** the ice tray is divided into compartments by partitions.

18. The device as claimed in claim 17, **characterized in that** the partitions are hollow and contain a phase change material.

19. The device as claimed in claim 14, **characterized in that** the lower section is provided with cells filled with a phase change material.

20. The device as claimed in claim 17, **characterized in that** the partitions include notches.

21. The device as claimed in claim 14, **characterized in that** fins are placed in the space between the two sections.

22. The device as claimed in claim 21, **characterized in that** the fins are hollow and contain a phase change material.

23. The device as claimed in claim 13, **characterized in that**:

- the ice tray is formed by a container (100);
- said container is provided with a thermal insulation (109) placed around its periphery;
- said container is removable and fits onto the lower part of the evaporator (102), which also includes a thermal insulator (108);
- the evaporator (102) is provided with external fins (101) that are immersed in the ice tray and with internal fins (103); and
- the evaporator is provided with a pipe (104) for connecting it to the rest of the device.

**Patentansprüche**

1. Verfahren zur schnellen Kälteerzeugung bei einer Nutz-Temperatur $T_u$, welches ein auf der Kopplung der reversiblen physikalisch-chemischen Vorgänge zwischen einem Gas und einem festen oder flüssigen Sorptionsmittel basierendes thermochemisches System einsetzt, wobei die Vorgänge, welche durch Vorgang BT und Vorgang HT bezeichnet sind, in einer Richtung exotherm und in der anderen Richtung endotherm sind, wobei diese Vorgänge derart sind, dass, bei einem gegebenen Druck, die Gleichgewichtstemperatur des Vorgangs BT unter der Gleichgewichtstemperatur des Vorgangs HT liegt, wobei dieses Verfahren die Durchführung zumindest eines aus einem Kälteerzeugungsschritt und einem Regenerationsschritt bestehenden Zyklus von einem Anfangszustand ausgehend umfasst, in dem ein Reaktor (2), in dem der Vorgang BT durchgeführt wird, und ein Reaktor (1), in dem der Vorgang HT durchgeführt wird, bei Umgebungstemperatur und voneinander getrennt vorliegen, wobei das Verfahren **dadurch gekennzeichnet ist, dass**:

- der Vorgang BT ein Flüssig/Gasförmig-Phasenübergang des Fluids G oder eine Absorption des Fluids G durch ein flüssiges Sorptionsmittel ist;
- der Vorgang HT eine Sorption des Fluids G durch ein flüssiges oder festes Sorptionsmittel ist;

- die endotherme Phase des Vorgangs BT in einem Reaktor durchgeführt wird, der von der Umgebung thermisch isoliert ist;

- die exotherme Phase des Vorgangs BT in einem Kondensator (4) durchgeführt wird, der in ständiger Kommunikation mit dem Reaktor (1) steht, in dem der Vorgang HT durchgeführt wird, wobei das kondensierte Fluid G daraufhin in den Reaktor (3) befördert wird, in dem die endotherme Phase des Vorgangs BT durchgeführt wird;

- der Kälteerzeugungsschritt, welcher aus der endothermen Phase des Vorgangs BT besteht, welcher ein Kältemittel-Fluid G in Form eines Gases freisetzt, Folgendes umfasst:

• eine Phase A1, in deren Verlauf der Reaktor, in dem der Vorgang HT (hiernach als Reaktor HT bezeichnet) durchgeführt wird, und der Reaktor, in dem der Vorgang BT (hiernach als Reaktor BT bezeichnet) durchgeführt wird, in Kommunikation (5) miteinander gebracht werden;

• eine Phase A2, in deren Verlauf die Reaktoren (1, 2) HT und BT voneinander isoliert werden und der Reaktor HT erwärmt wird;

- der Regenerationsschritt, bestehend aus der endothermen Phase des Vorgangs HT, welcher das Fluid G in Form eines Gases freisetzt, Folgendes umfasst:

• eine Phase C, in deren Verlauf der Reaktor HT erwärmt (6) wird und in ständige Kommunikation mit einem Kondensator gebracht wird;

• eine Phase D, welche aus der Beförderung des Fluids G in flüssiger Form aus dem Kondensator (4) zum Reaktor (2) BT besteht;

• eine Phase E, welche aus der Abkühlung des Reaktors (1) HT besteht, um diesen wieder zu den Anfangsbedingungen zurückzuführen.

2. Verfahren nach Anspruch 1, das zur Herstellung von Eisstücken eingesetzt wird, **dadurch gekennzeichnet, dass** dieses, zwischen der Phase A2 der passiven Kälteerzeugung und der Phase C des Regenerationsschritts, eine Zwischenphase B zum Ablösen der Eisstücke umfasst.

3. Verfahren nach Anspruch 2, **dadurch gekennzeichnet, dass** die Phase B das In-Kommunikation-Bringen des Kondensators und des Reaktors BT während einer kurzen Zeitdauer umfasst, um einen Teil des warmen, durch den endothermen Schritt des Reaktors HT freigesetzten Gases in die Nähe des Trägers, auf dem sich die Eisstücke bilden, zu bringen.

4. Verfahren nach Anspruch 2, **dadurch gekennzeichnet, dass** die Phase B mithilfe von elektrischen Widerständen durchgeführt wird, die in die Wand des Reaktors BT oder in den Reaktor BT im Bereich des Eisstückträgers integriert oder auf dieser bzw. in diesem angebracht sind.

5. Verfahren nach Anspruch 1, **dadurch gekennzeichnet, dass** die durch den exothermen Schritt im Reaktor HT gebildete Wärme im Verlauf des Schritts A1 abgeführt wird.

6. Verfahren nach Anspruch 1, **dadurch gekennzeichnet, dass** während des Ablaufs des Schritts C der Schritt D durchgeführt wird.

7. Verfahren nach Anspruch 1, **dadurch gekennzeichnet, dass** der Reaktor, in dem der Vorgang HT durchgeführt wird, und der Kondensator in ständiger Kommunikation sind.

8. Vorrichtung zur Durchführung des Verfahrens nach einem der Ansprüche 1 bis 7, **dadurch gekennzeichnet, dass**:

- diese zwei Reaktoren (1) und (2) und einen Kondensator (4) umfasst, der mit einem Mittel zum Abführen von Wärme ausgestattet ist;

- der Reaktor (2) mit dem Kondensator (4) über eine Rohrleitung (10) verbunden ist, die ein Ventil (5) umfasst;

- der Kondensator (4) mit dem Reaktor (1) über eine Rohrleitung (9) verbunden ist;

- der Reaktor (1) mit Mitteln zum Erwärmen (6) und Mitteln (7) zum Abführen der Wärme versehen ist und ein flüssiges oder festes Sorptionsmittel umfasst, das imstande ist, eine reversible Sorption eines Kältemittel-Fluids G durchzuführen;

- der Reaktor (2) Mittel (11) umfasst, die die thermische Isolierung desselben von der Umgebung ermöglichen, und die flüssige Form des Kältemittel-Fluids G oder ein flüssiges Sorptionsmittel enthält, welches in der Lage ist, das Kältemittel G zu absorbieren.

9. Vorrichtung nach Anspruch 8, **dadurch gekennzeichnet, dass** diese ferner eine Rohrleitung (12) umfasst, die mit einem Ventil (13) ausgestattet ist, das die Reaktoren (1) und (2) direkt miteinander verbindet.

10. Vorrichtung nach einem der Ansprüche 8 oder 9, **dadurch gekennzeichnet, dass** der Reaktor (2) ein Verdampfer ist.

**11.** Vorrichtung nach einem der Ansprüche 8 bis 10, **dadurch gekennzeichnet, dass** der Reaktor (2) ein Verdampfer ist, der mit einem Eisstückbehälter (3) versehen ist.

**12.** Vorrichtung nach Anspruch 11, **dadurch gekennzeichnet, dass** der Eisstückbehälter ein integraler Bestandteil des Verdampfers ist.

**13.** Vorrichtung nach Anspruch 11, **dadurch gekennzeichnet, dass** der Eisstückbehälter auf einer Wand des Verdampfers befestigt oder auf dieser angebracht ist, die direkt oder mithilfe von Rippen in Kontakt mit dem siedenden Kältemittel steht.

**14.** Vorrichtung nach Anspruch 12, **dadurch gekennzeichnet, dass** der Verdampfer aus zwei hohlen Profilen besteht, die unterschiedlichen Vertiefungen aufweisen und entlang ihrer Längskanten zusammengefügt sind, wobei das Profil mit der kleinsten Vertiefung oberhalb des Profils mit der größten Vertiefung angeordnet ist, wobei die Vertiefungs-Abschnitte jeweils nach oben ausgerichtet sind, wobei das Profil mit der kleinsten Vertiefung den Eisstückbehälter bildet, und wobei das Profil mit der größten Vertiefung den Behälter zur Aufnahme des Kältemittels bildet.

**15.** Vorrichtung nach Anspruch 14, **dadurch gekennzeichnet, dass** die Vertiefungen durch kreisbogenförmige oder ellipsenbogenförmige Abschnitte mit unterschiedlichen Durchmessern ausgebildet sind, wobei die Profile Rohrabschnitte mit zylinderförmigen oder elliptischen Querschnitten sind, die in Längsrichtung geschnitten sind.

**16.** Vorrichtung nach Anspruch 14, **dadurch gekennzeichnet, dass** die Profile miteinander über ihren darunter befindlichen Generator in Kontakt stehen.

**17.** Vorrichtung nach einem der Ansprüche 11 bis 16, **dadurch gekennzeichnet, dass** der Eisstückbehälter durch Trennwände in Fächer unterteilt ist.

**18.** Vorrichtung nach Anspruch 17, **dadurch gekennzeichnet, dass** die Trennwände hohl sind und ein Phasenübergangsmaterial enthalten.

**19.** Vorrichtung nach Anspruch 14, **dadurch gekennzeichnet, dass** das untere Profil mit Zellen versehen ist, die mit Phasenübergangsmaterial gefüllt sind.

**20.** Vorrichtung nach Anspruch 17, **dadurch gekennzeichnet, dass** die Trennwände Einschnitte umfassen.

**21.** Vorrichtung nach Anspruch 14, **dadurch gekennzeichnet, dass** die Rippen im Raum zwischen den beiden Profilen angeordnet sind.

**22.** Vorrichtung nach Anspruch 21, **dadurch gekennzeichnet, dass** die Rippen hohl sind und ein Phasenübergangsmaterial enthalten.

**23.** Vorrichtung nach Anspruch 13, **dadurch gekennzeichnet, dass**:

- der Eisstückbehälter aus einem Sammelbehälter besteht,
- der Sammelbehälter mit einer thermischen Isolierung (109) versehen ist, die um seinen Umfang herum angeordnet ist.
- der Sammelbehälter entfernbar ist und an den unteren Teil des Verdampfers (102) angepasst ist, der ebenfalls eine thermische Isolierung (108) umfasst;
- der Verdampfer (102) mit Außenrippen (101), die in den Eisstückbehälter eintauchen, und mit Innenrippen (103) versehen ist;
- der Verdampfer mit einem Rohrstutzen (104) versehen ist, der die Verbindung desselben mit dem Rest der Vorrichtung ermöglicht.

Fig. 1

Fig. 2

**Fig. 3**

**Fig. 4**

Fig. 5

Fig. 6

**Fig. 7**

**Fig. 8**

**Fig. 9**

**Fig. 10**

**Fig. 11a**

**Fig. 11b**

**Fig. 12a**

**Fig. 12b**

Fig. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0810410 A
- WO 9740328 A
- US 1932452 A
- EP 0580848 A
- EP 0382586 A